# EUROPÄISCHE PATENTSCHRIFT

(11) **EP 2 824 426 B1**
(45) Veröffentlichungstag und Bekanntmachung des Hinweises auf die Patenterteilung: **09.05.2018**
(21) Anmeldenummer: 13175765.0
(22) Anmeldetag: 09.07.2013
(51) Int. Cl.: G01D 5/241

(54) **Kapazitiver Drehlagengeber**
Capacitative rotation angle sensor
Capteur de rotation capacitif

(43) Veröffentlichungstag der Anmeldung: 14.01.2015
(73) Patentinhaber: Leica Geosystems AG, 9435 Heerbrugg (CH)
(72) Erfinder: Forrer, Peter, CH-8582 Dozwil (CH); Wiltsche, Siegfried, AT-6922 Wolfurt (AT)
(74) Vertreter: Kaminski Harmann

(56) Entgegenhaltungen:
- EP-A2- 2 270 433
- GB-A- 2 118 720
- US-A- 5 736 865
- US-A1- 2005 110 768

## Beschreibung

Die Erfindung betrifft einen kapazitiven Drehlagengeber nach dem Oberbegriff des Anspruchs 1 und ein Verfahren zur kapazitiven Drehlagenbestimmung dem Oberbegriff des Anspruchs 13.

Die Erfindung betrifft speziell das technische Gebiet von kapazitiven Drehlagengebern, bei welchen anhand einer sich mit der Drehlage verändernden Überlappung von - zueinander durch ein Dielektrikum getrennten - elektrisch leitfähigen Flächen und dem sich dabei verändernden Kapazitätswert zwischen diesen Flächen, eine Bestimmung der Drehlage erfolgt. Der resultierende Kapazitätswert ist dabei entsprechend eines vereinfachenden, theoretischen Modells proportional zum Verhältnis der Flächenüberlappung.

Dabei können im Drehgeber die Flächen berührungslos mit einem Luftspalt als Dielektrikum übereinander verdreht werden, wodurch kein mechanischer Verschleiss der Sensorik auftritt. Neben Gasen wie Luft können derartige Drehgeber auch mit flüssigen Dielektrika betrieben werden, also beispielsweise in Wasser oder Öl. Alternativ können aber auch durch feste Dielektrika entsprechend zueinander isolierte, beispielsweise auch aufeinander schleifende Flächen angewandt werden.

Um eine absolute Drehlage zu erhalten, gilt es eine Anordnung von Kapazitätsflächen zu schaffen, welche innerhalb des geforderten Messbereichs, also beispielsweise einer vollen Umdrehung, eine eindeutige, also absolute, Drehlagenbestimmung zu ermöglichen. Dies kann etwa durch eine nicht rotationssymmetrische Ausgestaltung der Kapazitätsverhältnisse erzielt werden. Beispielsweise mit mehreren, in einem Kreisring angeordneten kapazitiven Sensitivitätsflächen, welche von einem Finger (menschlich oder ausgebildet als eine elektrisch leitfähige Elektrode) entlang des Kreisrings überstrichen werden, wie dies etwa bei Bedieneinheiten von tragbaren Musikwiedergabegeräten bekannt ist, etwa aus US 2005/110768. Jedoch weisen die hier behandelten Drehlagengeber im Gegensatz zu derartigen Bedieneinheiten eine deutlich höhere Präzision und Winkelmessgenauigkeit von weniger als 1 Grad auf, vorzugsweise sogar deutlich darunter - also etwa im Bereich von 1/10 Grad, 1/100 Grad oder darunter.

Zwar kann bei entsprechender geometrischer Ausgestaltung der Kapazitätsflächen eine lineare bzw. bekannte Abhängigkeit der Kapazitätswerte von der Drehlage erzielt werden, jedoch wird eine derartige Lagenbestimmung auch von vielfältigen Störeinflüssen (wie z.B. variierende Flächendistanz, Änderungen des Dielektrikum (etwa abhängig von Luftfeuchtigkeit, Temperatur), externe elektrische Felder, Achsversatz, Nichtparallelität der Flächen, etc.) beeinflusst.

Speziell nicht rotationssymmetrische Anordnungen bergen aber den Nachteil, dass diese - speziell wenn eine genaue Drehlagenbestimmung mit hoher Winkelauflösung gefordert ist - auch sensitiv auf eine Vielfalt von Störeinflüssen, wie Exzentrizität, Verkippung, axiale Abstandsvariationen, Taumeln sowie auf externe Störfelder sind.

Die Asymmetrie des "Codes", welche zur absoluten Drehlagencodierung eingeführt wurde, lässt sich dabei nicht von allfälligen anderen Symmetrieverschiebungen durch Fehlereinflüsse differenzieren - was zu Messfehlern führt. Bei rotationssymmetrischer Codierung aus dem Stand der Technik ,wie etwa in US 5,736,865 beschrieben, können derartige Probleme geometriebedingt reduziert bzw. vermieden werden, jedoch ist durch die Symmetrie dabei keine absolute Lageninformation mehr verfügbar.

Um eine genaue, absolute Lageninformation zu erhalten, könnte kurzerhand die Anzahl der Sensitivitätsflächen entlang des Umfangs vergrössert werden, um durch den kleineren Winkelabstand dieser eine höhere Winkelauflösung zu erhalten. Jedoch ist dies in der Praxis aufwändig, sowohl in der Herstellung des Lagegebers als auch in der Signalauswertung. Elektronische Standardbauteile zur Kapazitätsbestimmung, speziell integrierte Schaltkreise oder IP-Cores für solche, welche in grossen Stückzahlen gefertigt werden und entsprechend einfach und preisgünstig verfügbar sind, sehen meist eine Auswertung einer beschränkten Anzahl von Kanälen vor, beispielsweise etwa bis zu 10, 12, 14, 16 oder 20 Kanälen. Bauteile zur Auswertung einer grösseren Anzahl von Kanälen, beispielsweise von 50 oder mehr Kanälen sind standardmässig nicht verfügbar, bzw. bedürfen zusätzlichem Hardwareaufwand durch Multiplexer-Schaltungen oder dergleichen.

Eine Aufgabe dieser Erfindung ist die Verbesserung eines kapazitiven Drehlagengebers, speziell von einem über eine Umdrehung absolutcodierten Drehlagengebers, insbesondere eines die Drehlage mit hoher Winkelgenauigkeit im Bereich von weniger als 1 Grad, vorzugsweise von 0,1 Grad oder darunter.

Eine spezielle Aufgabe ist die Bereitstellung eines über eine Umdrehung absolutcodierten kapazitiven Drehlagengebers, welcher die Drehlage mit hoher Winkelgenauigkeit im Bereich von weniger als 1 Grad, vorzugsweise in einem Grössenordnungsbereich von 0,1 Grad oder darunter auflöst.

Es ist eine Aufgabe dieser Erfindung einen kapazitiven Drehlagengeber bereitzustellen, welcher derart ausgebildet ist, dass häufige Fehlerquellen wie Exzentrizität, Taumeln, Verkippung, Änderungen der Umgebungsbedingungen, bei der Auswertung zumindest teilweise kompensierbar sind.

Eine grossindustrielle Herstellbarkeit, sowie eine Minituarisierung und Kostenreduktion des Drehlagengebers ist ein weiterer Teil der Aufgabe.

Dabei ist auch die Bereitstellung eines kapazitiven Encoders zur absoluten Lagebestimmung, welcher mit marktüblichen, in hohen Stückzahlen verfügbaren elektronischen Bauelementen und bei der Elektronikherstellung gebräuchlichen Standardprozessen herstellbar ist eine weitere Aufgabe dieser Erfindung.

Eine Bereitstellung eines entsprechenden Auswerteverfahrens zur hochgenauen Drehlagenbestimmung, insbesondere im Sub-Winkelgrad-Bereich, in einen kapazitiven Drehlagensensor ist eine weitere Aufgabe, insbesondere wobei bei der Auswertung eine Vielzahl von Fehler- und Störeinflüssen kompensiert bzw. ausgemittelt werden sollen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Erfindungsgemäss handelt es sich um einen kapazitiver Drehlagengeber zur absoluten Bestimmung einer Drehlage um eine Drehachse.

Dieser Drehgeber hat eine Transceiver-Einheit mit
∘ einer ersten Anordnung von N elektrisch leitfähigen, kapazitiven Sensitivitätsflächen, welche als Winkelsegmente über einen definierten Winkelbereich, insbesondere von annähernd 360°/N (annähernd, da abzüglich technologisch erforderlicher - im Verhältnis zu den Winkelsegmentbreiten geringfügigen z.B. kleiner 20% der Winkelsegmentbreiten - Abständen zwischen den Winkelsegmenten und/oder im Sinne von allfälligen fertigungstechnischen Toleranzen), ausgebildet sind, welche über den Umfang gleichförmig verteilt sind,
∘ einer elektrisch leitfähigen Referenzfläche und
∘ einer Auswerteschaltung mittels welcher ein elektrischer Kapazitätswert zwischen der Referenzfläche und einer der Sensitivitätsflächen bestimmbar ist.

Dabei sind die Sensitivitätsflächen und die Referenzflächen als Leiterbahnstrukturen auf einer ersten Elektronik-Leiterplatte ausgebildet.

Dieser Drehgeber hat weiters ein der Transceiver-Einheit gegenüberliegendes und relativ zu dieser um die Drehachse drehbares Pendant mit
∘ einer, der Referenzfläche gegenüberliegend angeordneten, Referenz-Koppelfläche und
∘ einer damit elektrisch verbundenen Anordnung von X ≥ 3 elektrisch leitfähigen Codeflächen.

Die Codeflächen sind erfindungsgemäss als Winkelsegmente mit zumindest annähernd demselben definierten Winkelbereich wie die Sensitivitätsflächen ausgebildet und in einer rotationsasymmetrischen (bzw. nichtrotationssymmetrischen) Winkelverteilung um die Drehachse angeordnet.

Anders ausgedrückt, wird erfindungsgemäss statt der bekannten Symmetrie zur Fehlerkompensation von häufigen Fehlerquellen eine Asymmetrie angewandt, welche derart ausgebildet ist, dass ebenfalls eine Fehlerkompensation durchführbar ist, wobei dadurch jedoch zudem eine absolute Lagebestimmung ermöglicht wird.

Dies kann erfindungsgemäss erreicht werden, indem die Asymmetrie derart ausgebildet ist, dass trotz dieser geometrischen Asymmetrie ein symmetrisches Gleichgewicht der erfassten Messwerte erzielt wird, auf dessen Basis eine Kompensation von Fehlern durchführbar ist. Die Asymmetrie ermöglicht dabei das Bestimmen des Absolutwertes der Lage, die Gleichgewichtsverhältnisse ermöglichen eine numerische Kompensation von Störeinflüssen, welche die ermittelte Drehlage verfälschen würden.

Im Folgenden wird eine exemplarische Ausführungsform eines erfindungsgemässen kapazitiven Drehlagengebers erläutert.

Der Drehlagengeber ist dabei mit einer Anzahl von N kapazitiven Sensitivitätsflächen ausgestattet, mit welchen jeweils ein Kapazitätswert gegenüber (einer der anderen Flächen oder) einer Referenzfläche ermittelbar ist.

Diese Ermittlung der Kapazitätswerte erfolgt mit einer elektronischen Schaltung, welche auch komplett oder teilweise als integrierter Schaltkreis in einem Chip ausgeführt sein kann. Beispielsweise wird in WO 2011/025812 oder EP 2 470 919 ein mögliches Prinzip einer derartigen Kapazitätsmessung beschrieben bzw. kann dieses aus Herstellerdatenblättern, wie beispielsweise jenem des Bauteils "AD7142" des Herstellers "Analog Devices" oder ähnlichen Bauteilen desselben oder eines anderen Herstellers, entnommen werden. Derartige integrierte Schaltkreise können intern schon über verschiedenste Kompensations- und Referenzierschaltungen bei der Kapazitätsermittlung verfügen, beispielsweise einer Kalibrierlogik für sich ändernde Umgebungsbedingungen wie Temperatur, Luftfeuchtigkeit, etc. oder andere Kalibrierdaten zur Verbesserung der ermittelten Kapazitäts-Messwerte.

Die Kapazitätsermittlung erfolgt in dieser Ausführungsform jeweils zwischen den Sensitivitätsflächen und einer Referenzfläche, welche mit einem RF-Signalgeber verbunden ist.

Die Sensitivitätsflächen sind kreisförmig angeordnet - im gezeigten Beispiel in Form von Segmenten eines Kreisringes, welche jeweils (im Rahmen der Fertigungstoleranzen) gleichgrosse Winkelsegmente abdecken und gegeneinander beabstandet sind. Die Kreisringsegmente können dabei in ihrer Form auch angenähert sein, z.B. trapezförmig.

Im Zentrum dieses Sensitivitätsflächen-Kreisringes befindet sich die Referenzfläche als Kreis oder Kreisring. Alternativ oder zusätzlich könnte die Referenzfläche auch den Sensitivitätsflächen-Kreisring umschliessen.

Die Sensitivitäts- und Referenzflächen können dabei als Leiterbahnen bzw. Leiterflächen einer Leiterplatte ausgeführt sein, vorzugsweise in einer der Aussenlagen aber auch geschützt in einer Innenlage (sofern diese zumindest einseitig in Richtung Aussenlage in diesem Bereich von Leiterbahnen ausgespart bleibt. Zur Abschirmung kann unter der Lage mit den Sensitivitäts- und Referenzflächen und/oder in deren Ebene um diese herum, eine Abschirmfläche vorgesehen werden. Die Auswerteelektronik kann beispielsweise platzsparend unterhalb der Sensitivitätsflächen angeordnet werden, aber auch daneben falls dies anwendungsbedingt vorteilhaft ist.

Die oben beschriebene Anordnung mit der Auswerteschaltung kann als "Stator" des Drehlagengebers bezeichnet werden, da dieser, nachdem dieser die Auswerteschaltung trägt, elektrisch kontaktiert werden muss. Dieser wird in vielen Anwendungen vorzugsweise als stehender Teil des Drehgebers ausgeführt. Die Begriffe Rotor und Stator sind dabei abhängig vom betrachteten Referenzsystem und können in anderen Ausführungsformen entsprechend auch ausgetauscht angewendet werden.

Bei der Auswertung kann aufgrund der Codeanordnung eine Verkippung, Exzentrizität der Achsen oder der Lagerung des erfindungsgemässen Drehgebers kompensiert werden. Neben der oder zusätzlich zur Kompensation dieser Effekte kann der erfindungsgemässe Drehgeber auch dazu genutzt werden, diese Effekte zu detektieren und zu quantifizieren, bzw. diese als zusätzliche Messwerte zu messen, wie diese Prinzipien in WO 2008/083797 beschreiben und beispielsweise in PCT/EP2012/054095 oder WO 02/21081 in Anwendungsbeispielen erläutert wird.

Dem zugehörigen Drehteil, auch als Pendant oder "Rotor" bezeichnet, kommt die Aufgabe zu, die Signale von der Referenzfläche drehlagenabhängig auf die Sensitivitätsflächen zu koppeln, sodass eine absolute Drehlage des Rotors gegenüber des Stators ermittelbar ist. Die kapazitive Kopplung kann dabei gänzlich berührungslos erfolgen, also mit einem durchgängigen Luftspalt zwischen Stator und Rotor. Zwischen Rotor und Stator können sich neben Luft auch andere, elektrisch nicht leitende Materialen befinden. Eine konduktive Kopplung der Referenzfläche auf den Rotor würde zwar dieselbe Funktion erfüllen, jedoch sind elektrische Kontakte zwischen beweglichen und stehenden Teilen meist nachteilig bezüglich deren Verschleiss und Zuverlässigkeit, weshalb diese meist vermieden werden.

In den im Folgenden dargestellten Ausführungsformen ist der Rotor Scheibenförmig ausgeführt. Die Drehachse des Drehlagensensors geht dabei zumindest annähernd zentrisch durch die Anordnung der Koppel- bzw. Referenzflächen. Die gezeigte Scheibe besitzt zentrisch eine Referenz-Koppelflächen welche über der Referenzfläche zu liegen kommt und vorzugsweise in etwa dieselbe radiale Abmessung aufweist. Bei der oben beschriebenen Variante einer aussen liegenden Referenzfläche auf dem Stator, wäre diese gegenüberliegende Referenz-Koppelfläche entsprechend ebenfalls aussen, z.B. als Kreisring angeordnet.

Diese Referenz-Koppelfläche ist radial nach aussen (bzw. in der anderen Variante entsprechend nach innen) mit Codeflächen verbunden, welche das von der Referenz-Koppelfläche kapazitiv "empfangene" Signal auf die Sensitivitätsflächen koppelt, sodass Kapazitätswerte zwischen der Referenz- und den Sensitivitätsflächen bestimmbar sind. Es wird anders ausgedrückt jeweils eine Serienschaltung
- der Kapazität zwischen der Referenzfläche des Stators und Referenz-Koppelflächen des Rotors, sowie
- der Kapazität zwischen einer den Codeflächen und den jeweils benachbarten Sensitivitätsflächen
   bestimmt.

Die gezeigten Codeflächen sind dabei ebenfalls als Kreissegmente ausgebildet, insbesondere da sich Kreisformen für rotative Messsysteme per se anbieten. Die Aufteilung dieser Codeflächen um den Umfang erfolgt dabei erfindungsgemäss aber nicht gleichmässig verteilt, wie dies bei den gezeigten, zugehörigen Sensitivitätsflächen der Fall ist, sondern mit einer nicht rotationssymmetrischen geometrischen Aufteilung.

Durch diese Asymmetrie lässt sich anhand der Auswertung der - mit den Sensitivitätsflächen bestimmten - Kapazitätswerten eine absolute Drehlage des Rotors bezüglich des Stators ermittelbar. Hierfür wäre eine beliebige Asymmetrie der Codeflächen hinreichend, also beispielsweise auch eine einzige Codefläche, wie z.B. in US 5,736,865.

Um eine höhere Winkel-Auflösung zu erzielen, kann nunmehr eine Erhöhung der Kapazitätsauflösung der Kapazitätswertbestimmung angewandt werden. Einer solchen Erweiterung der Messauflösung sind jedoch durch physikalische Limiten der Messschaltung oder schlichtweg durch den verwendeten Messbausteins Grenzen gesetzt, welche nur mit hohem Zusatzaufwand überwunden werden können. Insbesondere das erzielbare SNR ist letztendlich entscheidend für die maximal erzielbare Messgenauigkeit und dieses lässt sich ab einer gewissen Schwelle durch eine reine Messauflösungserhöhnung nicht mehr weiter Verbesserns. Alternativ kann beispielsweise durch Verringerung der Bandbreite einhergehend mit einer längeren Messzeit und gegebenenfalls von Mittelwertbildungen eine weitere Genauigkeitssteigerung erzielt werden.

Um bei gleicher Kapazitätsauflösung (z.B. gegeben durch den verwendeten Messbaustein bzw. der Messschaltung) die Drehlage mit höherer Auflösung bestimmen zu können, kann auch die Anzahl der Sensitivitätsflächen erhöht werden um bei gleicher Amplitudenauflösung der Kapazitätsmessung eine genauere Lagebestimmung durchzuführen.

Erfindungsgemäss wird eine verbesserte Lagenauflösung erzielt, indem durch die geometrische Anordnung und Ausgestaltung der Codeflächen und Sensitivitätsflächen, aus den resultierenden Messsignalen der Kapazitätswerte Fehlerterme herhausmittelbar sind. Diese geometrische Anordnung und Ausgestaltung erfolgt aber dennoch in einer asymmetrischen Weise, sodass auch eine absolute Lageninformation bestimmbar ist. Diese Fehlerterme, welche in dieser Anordnung bestimmbar sind, umfassen sowohl deterministische Fehlern, wie Ausmittigkeit, Taumeln, etc. aber auch von nichtdeterministischen Fehler wie Rauschen, äusseren Störeinflüssen, etc. Da trotz der Rotationsasymmetrie der geometrischen Anordnung der Codeflächen eine Symmetrie in den Messwerten erzielbar ist, sind die deterministischen Fehler bestimmbar. Durch die Mehrfache Messwertbestimmung entlang des Umfangs sind zudem statistische Verbesserungen z.B. in Bezug auf Rauschterme erzielbar. Durch die mit diesen beiden Effekten erzielte Verbesserung des SNR in der Drehlagenbestimmung kann somit eine Verbesserung der Drehlagenbestimmung erzielt werden.

Die Erfindung betrifft entsprechend auch ein Verfahren zur kapazitiven Drehlagenerfassung, welches mit einem kapazitive Koppeln von einer Referenzfläche zu einer Referenz-Koppelfläche und über X ≥ 3 mit dieser Referenz-Koppelfläche leitfähig verbundenen Codeflächen zu einer Teilmenge von N Sensitivitätsflächen, N Kapazitätswerte bestimmt. Durch eine Auswerteschaltung erfolgt dabei mittels eines Anlegens eines RF-Signals an die Referenzfläche ein Bestimmen der N Kapazitätswerten zwischen der Referenzfläche und den Sensitivitätsflächen.

Die Referenzfläche, die Sensitivitätsflächen und die Auswerteschaltung können dabei auf einer als Elektronik-Leiterplatte ausgebildeten Transceiver Einheit angeordnet sein.

Die Referenz-Koppelfläche mit den Codeflächen kann auf einem gegenüber der Transceiver Einheit um eine Drehachse drehbaren Pendant angeordnet sein, welches elektrisch passiv und nicht mit der Transceiver Einheit leitfähig verbunden ausgeführt sein kann. Beispielsweise kann das Pendant als unbestückte Elektronik-Leiterplatte ausgeführt sein, auf welcher die Referenz-Koppelfläche und die Codeflächen als eine Leiterbahnstruktur ausgebildet sind. Alternativ kann das Pendant auch als ein Blech-Stanzteil mit dem Umriss der Referenz-Koppelfläche und der Codeflächen ausgebildet sein.

Die Drehlagenerfassung erfolgt dabei absolut mit einer nichtrotationssymetrische Winkelverteilung der Codeflächen. Dabei wird bei der Drehlagenerfassung wie beschreiben auf Basis von Symmetrieeigenschaften der Kapazitätsverhältnisse eine Bestimmung und Kompensation von geometrischen Fehlstellungen der Codeflächen zu den Sensitivitätsflächen durchgeführt.

Das Verfahren kann mit einer Bestimmung und Kompensation von geometrischen Fehlstellungen der Codeflächen zu den Sensitivitätsflächen mit einer differenziellen Auswertung der durch deren Anordnung resultierenden Kapazitätsverteilung erfolgen. Bei der erfindungsgemässen Anordnung können die Signale der Sensitivitätsflächen insbesondere differenziell ausgewertet werden, wenn in jeder beliebigen Drehlage maximal eine der Codeflächen mit maximal einer der Sensitivitätsflächen überlappt und bei einer vollständigen Überlappung einer Sensitivitätsfläche eine dieser gegenüberliegende Sensitivitätsfläche keine Überlappung aufweist.

Die Erfindung umfasst auch ein Computerprogrammprodukt, gespeichert auf einem Datenträger oder als Festverdrahtete Logik, zur Ausführung einer Drehwinkelbestimmung anhand von einer Anzahl von N Kapazitätswerten eines kapazitiven Drehgebers wie dieser hier beschrieben ist. Durch dieses Computerprogrammprodukt wird eine absolute Drehwinkelbestimmung mit einer numerischen Kompensation von geometrischen Fehlstellungen im Drehgeber auf Basis von Symmetrieeigenschaften durchgeführt.

Das erfindungsgemäße Verfahren und die erfindungsgemäße Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Die gezeigten Figuren sind dabei nicht als maßstäblich zu betrachten. Im Einzelnen zeigen:
Fig. 1 eine erste beispielhafte Darstellung von Komponenten einer erfindungsgemässe Ausführungsform eines Drehlagengebers, wobei Transceiver und Pendant nebeneinander dargestellt sind;
Fig. 2 eine zweite beispielhafte Ausführungsform eines erfindungsgemässen Drehlagengebers in einer zusammengebauten Darstellung;
Fig. 3 ein Beispiel einer erfindungsgemässen Ausführungsform eines Pendants mit Referenz-Koppelfläche und Codeflächen;
Fig. 4 ein Beispiel einer erfindungsgemässen Ausführungsform eines Transceivers mit Referenzfläche und Sensitivitätsflächen;
Fig. 5 eine beispielhafte Darstellung von Überlappungen von Codeflächen und Sensitivitätsflächen in einem erfindungsgemässen Drehlagengebers in unterschiedlichen Drehlagen;
Fig. 6 eine Darstellung eines Verlaufs des von einer Sensitivitätsfläche bestimmten Kapazitätswerts über eine Umdrehung anhand der beispielhaften Ausführungsform aus Fig. 3 und Fig. 4;
Fig. 7 eine Darstellung eines Verlaufs der von allen N Sensitivitätsflächen bestimmten Kapazitätswerten über eine Umdrehung anhand der beispielhaften Ausführungsform aus Fig. 3 und Fig. 4;
Fig. 8 eine beispielhafte Ausführungsform eines erfindungsgemässen Drehlagengebers in einer Schnittdarstellung;
Fig. 9 ein Anwendungsbeispiel für den Einsatz eines erfindungsgemässen Drehlagengebers;
Fig. 10 beispielhafte Darstellungen von erfindungsgemässen Varianten von Anordnungen von Sensitivitäts- und Codeflächen für einen erfindungsgemässen Drehlagengeber.

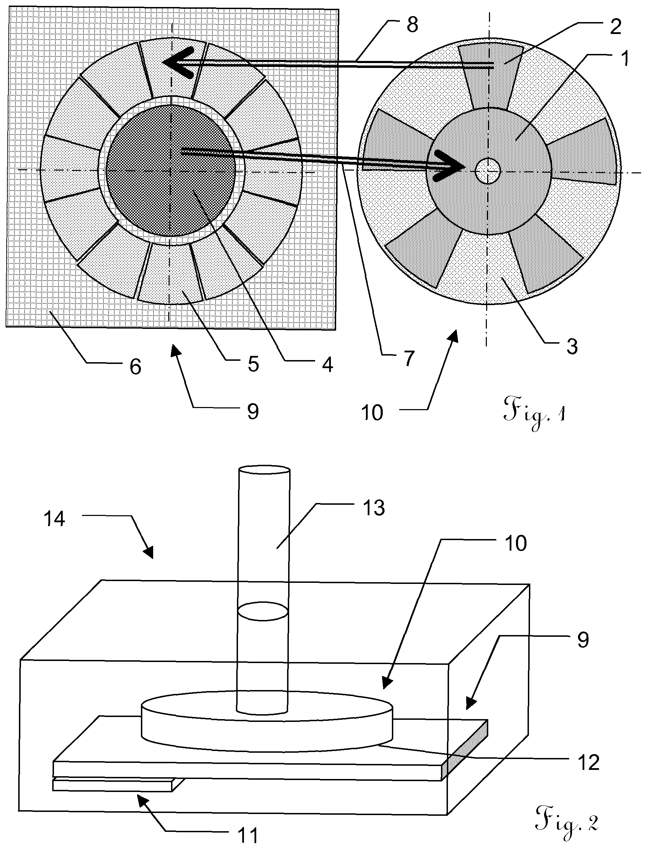

**Fig. 1** zeigt eine Ausführungsform eines erfindungsgemäßen kapazitiven Drehlagengebers zur absoluten Bestimmung einer Drehlage um eine Drehachse. Dieser hat eine Transceiver-Einheit 9, mit einer ersten Anordnung von einer Anzahl N elektrisch leitfähigen, kapazitiven Sensitivitätsflächen 5, welche als Winkelsegmente über einen definierten Winkelbereich ausgebildet sind und welche über den Umfang gleichförmig verteilt sind. Der definierte Winkelbereich ergibt sich dabei insbesondere zu annähernd 360°/N, abzüglich der im wesentlichen vernachlässigbar kleinen, insbesondere gegenüber den Winkelbereichen um Größenordnungen kleineren, Beabstandungen zwischen den Sensitivitätsflächen 5.

Die Transceiver-Einheit 9 hat weiters eine elektrisch leitfähige Referenzfläche 4 und eine Auswerteschaltung, mittels welcher ein elektrischer Kapazitätswert zwischen der Referenzfläche 4 und einer der Sensitivitätsflächen 5 bestimmbar ist.

Die Sensitivitätsflächen 5 und die Referenzfläche 4 sind dabei als Leiterbahnstrukturen auf einer ersten Elektronik-Leiterplatte 6 ausgebildet. Die Auswerteschaltung kann in Form von einem oder mehreren elektronischen Bauteilen, welche auf der Leiterplatte 6 bestückt sind, ausgebildet sein.

Der Transceiver-Einheit 9 gegenüberliegenden und relativ zu dieser um die Drehachse drehbar, ist ein Pendant 10 angeordnet. Dieses hat eine, der Referenzfläche 4 gegenüberliegend angeordnete, Referenz-Koppelfläche 1 und eine mit der Referenz-Koppelfläche 1 elektrisch verbundene Anordnung von X ≥ 3 elektrisch leitfähigen Codeflächen 2. Gegenüberliegend bedeutet hierbei speziell, dass die Ausdehnungsebenen der Referenzfläche 4 und der Referenz-Koppelfläche 1 zumindest annähernd parallel sind. Die Ausdehnungsebenen der Referenzfläche 4 und der Referenz-Koppelfläche 1 ist dabei auch zumindest annähernd orthogonal zur Drehachse 13.

Die Codeflächen sind dabei als Winkelsegmente mit zumindest annähernd demselben definierten Winkelbereich wie die Sensitivitätsflächen ausgebildet und in einer nichtrotationssymmetrischen Winkelverteilung um die Drehachse angeordnet.

In Fig. 1 sind die Transceiver-Einheit 9 und das Pendant 10 nebeneinander dargestellt. Die Drehachse 13 ist jeweils durch das Kreuz der dargestellten Achslinien dargestellt, anhand welcher auch die nichtrotationssymmetrische Winkelverteilung der Codeflächen 2 gut ersichtlich ist. Zur Drehwinkelbestimmung sind Transceiver-Einheit 9 und das Pendant 10 mit einer elektrisch nichtleitenden Schicht, vorzugsweise einem Luftspalt, zwischen ihnen, übereinander angeordnet, wobei die jeweils dargestellten Achskreuze zumindest annähernd überlappen.

Mit dem Terminus "zumindest annähernd" sind in obigen Zusammenhängen insbesondere Abweichungen im Bereich von Fertigungstoleranzen, Montagetoleranzen oder sonstigen Ungenauigkeiten gemeint, welche im allgemeinen eine Abweichung von 20 % nicht überschreiten, meist sogar deutlich darunter liegen. Viele dieser Abweichungen können mithilfe der vorliegenden Erfindung auch kompensiert werden, wodurch diese das Messergebnis nur unwesentlich beeinflussen und daher in Rahmen der Erfindung durchaus tolerabel sind.

Die Referenz-Koppelfläche 1 und die Codeflächen 2 können dabei ebenfalls als Leiterbahnstrukturen auf einer zweiten Elektronik-Leiterplatte 6 ausgebildet sein.

Die kapazitiven Kopplungen, welche zur Lagenbestimmung erfasst werden, erfolgen - durch den Pfeil 7 Symbolisiert - von der Referenzfläche 4 über ein Dielektrikum, insbesondere über einen Luftspalt hinweg, hin zur Referenz-Koppelfläche 1. Diese ist mit den Codeflächen 5 verbunden, welche - Symbolisiert durch den Pfeil 8 - wiederum über ein Dielektrikum hin zu den Sensitivitätsflächen 5 kapazitiv gekoppelt werden. Über diese Sensitivitätsflächen 5 bestimmt die Auswerteschaltung jeweils einen Kapazitätswert - über den beschriebenen Pfad - hin zur Referenzfläche 4. Dabei hängen die Kapazitätswerte von der Drehlage der Codeflächen 2 gegenüber den Sensitivitätsflächen 5, genauer gesagt von deren Flächenüberlappungsverhältnis, ab. Allfällig auftretende parasitäre kapazitive Kopplungen, beispielsweise direkt zwischen der Referenzfläche 4 und den Sensitivitätsflächen 5 werden der Einfachheit halber nicht berücksichtigt, insbesondere auch, weil dies in Form von Offsets oder ähnlichem erfindungsgemäß weitgehend bestimmt und/oder kompensiert werden können.

**Fig. 2** zeigt eine zusammengebaute Ausführungsform eines erfindungsgemäßen Drehlagengebers 14, in welcher das Pendant 10 um die Drehachse 13 drehbar gegenüberliegend zur Transceiver-Einheit 9 angeordnet ist. Zwischen diesen beiden Elementen ist ein Luftspalt 12 vorhanden. Das Pendant 10 und die Transceiver-Einheit 9 weisen also keinen elektrisch leitfähigen Kontakt zueinander auf. Das Pendant ist also insbesondere als elektronisch passives Element ausgeführt, welches keine aktiv keine Signale erzeugt und keine aktiven elektronischen Komponenten aufweist. Die Auswerteschaltung 11 ist dabei auf der, den Sensitivitätsflächen 5 gegenüberliegenden Unterseite der Leiterplatte 6 gezeigt, kann jedoch in einer anderen Ausführungsform auch auf der Oberseite der Leiterplatte 6 der Transceiver-Einheit 9 angebracht sein.

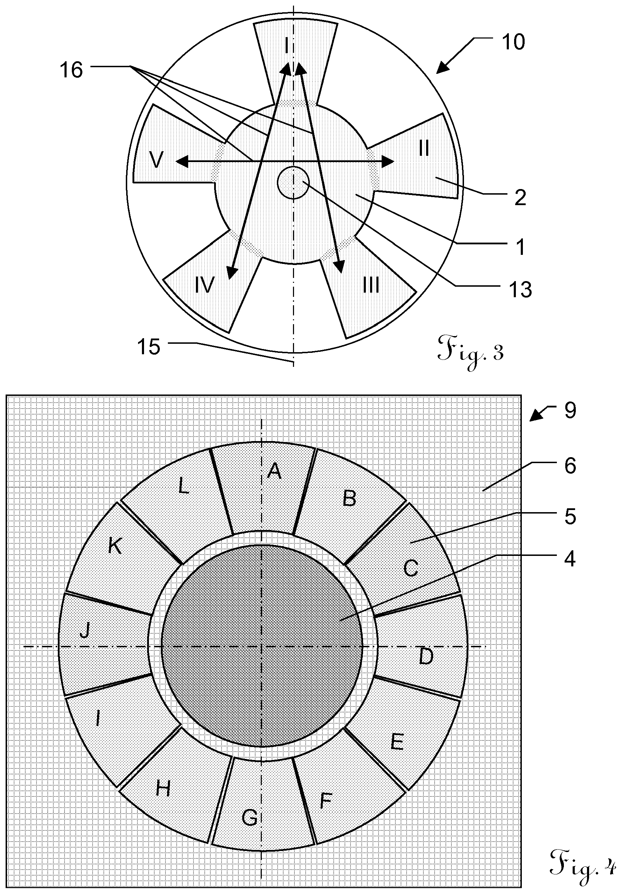

In **Fig. 3** ist eine beispielhafte Ausführungsform eines Pendants 10 dargestellt. Um die Drehachse 13 ist dabei konzentrisch die Referenz-Koppelfläche dargestellt als eine Kreis bzw. Kreisringfläche dargestellt, welche mit dieser verbundene, radial darüberhinausreichende Winkelsegmente, welche die Codeflächen 2 bilden, ausgebildet ist. Die erfindungsgemäße, nicht rotationssymmetrische Anordnung der Codeflächen 2 um die Referenzkoppelfläche 1 ist dabei deutlich ersichtlich. Im gezeigten Beispiels sind fünf, mit lateinischen Zahlen bezeichnete Codeflächen 2 ausgebildet, welche in ihrer Breite alle denselben Winkelbereich überdecken, jedoch in ihren Abständen zueinander variieren, also nicht rotationssymmetrisch angeordnet sind. Anhand dieser nicht rotationssymmetrischen Anordnung lässt sich durch die Sensitivitätsflächen 5, auf Basis der mittels diesen ermittelten Kapazitätswerte, eine absolute Drehlage des Pendants 10 gegenüber der Transceiver-Einheit 9 ermitteln.

Trotz der nicht rotationssymmetrischen Anordnung ergeben sich dennoch Symmetrien der Codeflächen 2 bezüglich ihrer Überlappung mit den zugehörigen Sensitivitätsflächen 5. Diese Symmetrien sind durch die Pfeile 16 angedeutet. Die Abbildung zeigt auch eine Spiegelsymmetrie um die Durchmesserachse 15. Anhand dieser Symmetrien können Fehler in der Drehlagenbestimmung bestimmt und/oder kompensiert werden.

Die erfindungsgemäße Kombination von Nicht-Rotationssymmetrie und Symmetrie der resultierenden Kapazitätsverhältnisse, ermöglicht eine genaue absolute und zuverlässige Lagenbestimmung. Insbesondere werden bei dieser im Verhältnis zur Drehauflösung nur wenigen Sensitivitätsflächen 5 ausgewertet.

Dabei können die Codeflächen 2 speziell derart angeordnet sein, dass in jeder beliebigen Drehlage maximal eine einzige der Codeflächen 2 mit einer der Sensitivitätsflächen 5 zu deren maximaler Überlappung gelangt.

Insbesondere kann die Anordnung der Codeflächen 2 dabei derart gewählt sein, dass bei jeder der maximalen Überlappungen eine der Sensitivitätsflächen 5, welche dieser maximalen Überlappung diagonal gegenüberliegt, jeweils von keiner Codefläche 2 überlappt wird - also einen minimalen Kapazitätswert detektiert. Die dadurch erlangte Kenntnis von Maximalwert und Minimalwert der Kapazität kann beispielsweise für eine Kalibrierung der Skalierung der Kapazitätswerte herangezogen werden. Es kann beispielsweise eine differenzielle Auswertung dieser beiden Kapazitätswerte erfolgen, und/oder eine Auswertung bezogen auf den somit bestimmbaren Minimumwert, Maximumwert oder Mittelwert der Kapazität durchgeführt werden. Zudem können somit auch weitere Mittelungen, beispielsweise über mehrere Kapazitätswerte, zeitlich Mittelungen oder statistische Verfahren zur Anwendung gebracht werden.

Das Pendant 10 kann dabei als zweite Elektronik-Leiterplatte 3 ausgeführt sein, auf welcher die Referenz-Koppelfläche 1 und die Codeflächen 2 als Leiterbahnstruktur ausgebildet sind. Die Leiterbahnstruktur kann dabei insbesondere als einstückige Leiterbahnfläche auf der Außenlage der Leiterplatte 3 ausgeführt sein. Eine derartige Leiterplatte 3 ist in großen Stückzahlen industriell und kostengünstig und mit einer hohen Maßhaltigkeit der Leiterbahnstrukturen, z.B. etwa im Bereich von 1/10mm oder deutlich darunter herstellbar. Zudem sind Leiterplattenmaterialen wie etwa FR4 mechanisch recht stabil und weisen auch ein vorteilhaftes Temperaturverhalten auf.

Das Pendant 10 kann auch auf seiner der Transceiver-Einheit 9 zugewandten und auf seiner der Transceiver-Einheit 9 abgewandten Seite mit Leiterbahnstrukturen versehen sein, insbesondere mit zumindest annähernd denselben Leiterbahnstruktur auf beiden Seiten. Dies bringt Vorteile bezüglich des mechanischen Verzugs des Pendants 10, speziell unter wechselnden Temperatur- und oder Feuchtigkeits-Einflüssen. Die Herstellung als Leiterplatte 3 mit zwei Außenlagen ist dabei ein Standardprozess, was eine kostengünstige Herstellung ermöglicht. Ebenso ein allfälliges Bohren eines mittigen Zentrierlochs 13 für eine Achsaufnahme ist ein Standardprozess in der Leiterplattenherstellung.

Wenn höhere Genauigkeiten gefordert sind, kann die Elektronik-Leiterplatte auch in Keramik oder Glas ausgeführt werden, auf welchem die Leiterstruktur beschichtet wird. Hierzu bieten sich beispielsweise übliche Verfahren wie Siebdruck, Sputtern, Aufdampfen, Gasphasenabscheidung, etc, mit einem allfällig nachfolgenden Maskier- und Ätzprozess an, welche ebenfalls großtechnisch und entsprechend kostengünstig durchführbar sind.

Alternativ kann das Pendant 10 auch großtechnisch als Blechstanzteil mit hoher Maßhaltigkeit einfach und kostengünstig hergestellt werden. Dabei werden lediglich die Umrisse der Referenz-Koppelfläche mit den Codeflächen ausgestanzt und die Winkelbereiche zwischen den Codeflächen können leer bleiben.

In der in **Fig. 4** gezeigten erfindungsgemäßen Ausführungsform einer Transceiver-Einheit 9, ist die Referenzfläche 4 als eine einzige, kreisrunde, zentrische Referenzfläche 4 ausgebildet. Zur Kapazitätsbestimmung kann diese Referenzfläche 4 von der hier nicht dargestellten Auswerteschaltung 11 mit einem RF-Signal beaufschlagt werden. Dieses RF-Signal wird dann kapazitiv zum Pendant 10 - speziell über einen Luftspalt 12 auf die Referenz-Koppelfläche 1 und über die mit der Referenz-Koppelfläche 1 elektrisch leitfähig verbundenen Codeflächen 2 des Pendants 10 zurück zur Transceiver-Einheit 9 - auf dessen Sensitivitätsflächen 5 gekoppelt. Mit den N Sensitivitätsflächen 5 - hier mit den lateinischen Buchstaben A bis L durchnummeriert - können somit N drehwinkelabhängige Kapazitätswerte mit jeweils einer der N Sensitivitätsflächen 5 bestimmt werden.

Diese Kapazitätswerte sind primär von den Überlappungsverhältnissen der Code- 2 und Sensitivitätsflächen 5 abhängig - wodurch die Drehalge bestimmbar ist. Erfindungsgemäß kann dabei aufgrund der rotationsasymmetrischen Winkelverteilung der Codeflächen 2 die Drehlage als Absolutwert bestimmt werden. Die hier angewandte Anordnung der Codeflächen 2 und Sensitivitätsflächen 5, kann auch genutzt werden, um durch die dabei entstehenden Kapazitätsverhältnisse sekundäre - nicht zur primären Drehwinkelbestimmung hergezogene - Einflüsse auf die Kapazitätswerte, wie etwa geometrische Fehlstellungen wie Achsversatz, Taumeln, etc. aber auch Umgebungseinflüsse die externe Felder, Temperatur- und Luftfeuchtigkeits-Drift zu bestimmen und zu kompensieren.

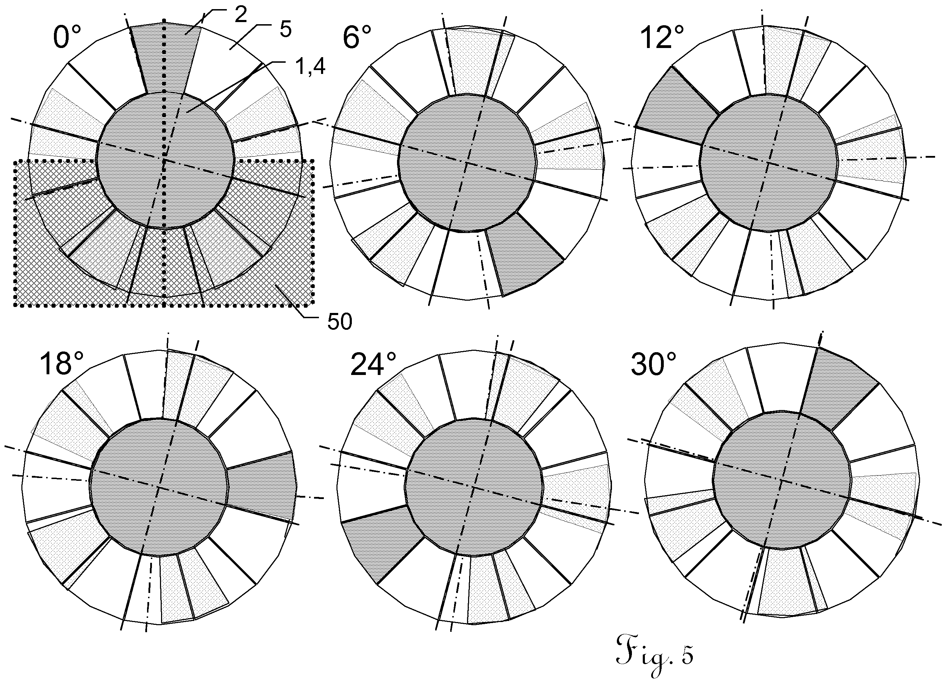

Anhand vom **Fig. 5** wird nunmehr eine konkrete Ausführungsform mit einer allgemeinen Anzahl von N Kapazitätsmesskanälen beschrieben und konkret an einem exemplarischen Beispiel mit 12 Kanälen im Detail erläutert.

Bei N Kapazitätsmesskanälen sind N Sensitivitätsflächen 5 - im gezeigten Fall als segmentierter Kreisring mit N Winkelsegmenten - vorhanden, welche alle gleich gross und um jeweils 360 Grad/N (bspw. 360/12 Grad = 30 Grad versetzt angeordnet sind. Die Winkelsegmente sind dabei - abzüglich eines kleinen Abstands zwischen den Sensitivitätsflächen 5 - entsprechend auch annähernd 30 Grad breit. Die Referenzfläche 4 ist als Vollkreis im Zentrum der Sensitivitätsflächen 5 ausgebildet.

Überlagert dazu ist das Pendant 10 zur Transceiver-Einheit 9 dargestellt. Die Winkelsegmente der Sensitivitätsflächen 5 sind dabei nicht ausgefüllt, die Winkelsegmente der Codeflächen 2 hingegen semi-transparent ausgefüllt dargestellt. Die Referenz-Empfangsfläche 1 in der Mitte, welche zumindest in etwa die gleich grosse Fläche wie die Referenzfläche 4 aufweist, bzw. die darunter liegende Referenzfläche 4, sind dunkler ausgefüllt dargestellt. Ebenfalls dunkler ausgefüllt ist auch eine vollständige Überlappung einer Codefläche 2 mit einer Sensitivitätsfläche 5.

Die Codeflächen 2 sind rund um die Referenz-Empfangsfläche 1 angeordnet. Dabei sind X = N/2 - 1 Codeflächen 2 vorhanden, welche alle mit der Referenz-Empfangsfläche 1 verbunden sind und deren Aussendurchmesser in etwa jenem der Sensitivitätsflächen 5 entspricht.

Bei dem Beispiel von 12 Sensitivitätsflächen 5 sind also X = 12/2 - 1 = 5 Codeflächen 2 vorhanden.

Diese X Codeflächen 2 sind erfindungsgemäss jedoch nicht gleichmässig über den Umfang verteilt, wie dies bei den Sensitivitätsflächen 5 der Fall ist. Die Winkelverteilung der Codeflächen 2 ist derart gestaltet, dass in einem Drehwinkelabstand von 360°/(N * X) jeweils eine maximale Überlappung einer der Codeflächen 2 mit einer der Sensitivitätsflächen 5 auftritt.

Die Winkelverteilung der Codeflächen 2 ist in dieser Ausführungsform auch derart gestaltet, dass die Winkelabstände zwischen benachbarten Codeflächen 2 jeweils um 360°/N oder 0 plus einem Vielfachen von 360°/ (N * X) variiert sind.

Insbesondere tritt dabei eine Anzahl N mal X von maximalen Kopplungen von einer der Codeflächen 2 mit einer der Sensitivitätsflächen 5 pro voller Umdrehung auf, welche in gleichmäßig über den Umfang verteilten Drehwinkel erfolgen.

Der Drehwinkel zwischen jeweils zwei Flächen kann dabei zu X*360 Grad / (0,5*N^2-N) gewählt werden, wobei X zwischen (N - 1) und (1,5*N - 4) liegt.

Im Beispiel mit N = 12 ergeben sich die Winkelpositionen der Codeflächen 2 also zu:

| Fläche: | Winkel: |
|---|---|
| I | 0 Grad |
| II | 78 Grad |
| III | 144 Grad |
| IV | 216 Grad |
| V | 282 Grad |

Durch die ungleichmässige Verteilung de Codeflächen 2 über den Umfang kann die Drehlage über 360 Grad eindeutig, also absolut, bestimmt werden.

Die Anordnung der Codeflächen 2 - also die Aufteilung der Zwischenräume zwischen den Codeflächen 2 erfolgt dabei insbesondere derart, dass die Reihenfolge der vollständigen Überlappungen von einer der Codeflächen 2 mit einer der Sensitivitätsflächen 5 bei einer Drehung des Pendants 10 in eine Richtung nicht umlaufend (oder entgegengesetzt) dieser Drehrichtung erfolgt. Die Anordnung der Codeflächen und deren Beabstandungen kann dabei derart erfolgen, dass die Abfolge oder Reihenfolge der maximalen Überlappungen während einer unidirektionalen Drehung des Pendants 10 gegenüber der Transceiver-Einheit 9 eine der vorherigen Überlappung jeweils in etwa gegenüberliegende Aufeinanderfolge bildet. Bei einer Verdrehung des Drehgebers in eine Richtung ergibt sich also keine im Kreis umlaufende Abfolge von vollständig überlappten Sensitivitätsflächen. Bei einer solchen Drehung der Codeflächen 2 des Pendants 10 treten aufeinander folgende vollständige Überlappungen von einer der Sensitivitätsflächen und einer der Codeflächen also jeweils in etwa gegenüberliegend auf. Beispielsweise überlappt jeweils eine Sensitivitätsfläche vollständig, welche möglichst in einem, der vorangegangenen vollständigen Überlappung gegenüberliegenden Bereich liegt, also etwa in dem in der Figur zu 0° markierten Bereich 50, welcher in etwa die der Überlappung gegenüberliegende Hälfte 50 der Sensitivitätsflächen umfasst - also in einem der vorangehenden Überlappung in etwa diagonal gegenüberliegenden Bereich. Anders ausgedrückt können also dabei die Codeflächen derart angeordnet sein, dass bei einer unidirektionalen Änderung der Drehlagen des Drehgebers eine Abfolge der maximalen Überlappungen entsteht, bei welcher die maximalen Überlappungen in einem diagonal gegenüberliegenden Bereich 50 zur jeweils vorherigen Überlappung auftreten, insbesondere also die vollständigen Überlappungen mit einem Winkelabstand von mehr als 45° oder 90° zueinander erfolgen.

Dieses ist mit den erfindungsgemäss bestimmten Drehwinkelabständen zwischen jeweils zwei Codeflächen 2 des Pendants 10 erzielbar, wie dies in Fig. 5 in anhand einer beispielhaften Ausführungsform für eine Drehung von 0° bis 30° illustriert ist. Die optimale Anordnung dieser Beabstandungen entsprechend der vorliegenden Erfindung kann auch von einem Fachmann durch Versuche oder im Rahmen einer Simulation verifiziert und/oder ermittelt werden. Eine derartige Anordnung der Codeflächen 2 und Sensitivitätsflächen 5 trägt bei einem erfindungsgemässen Drehgeber dazu bei, dass bei der Kapazitätsauswertung zur Drehlagenbestimmung eine Vielzahl von Lagefehlern und andere Störeinflüsse kompensierbar sind.

Bezogen auf alle Sensitivitätsflächen 5, wiederholt sich ein eine volle Überlappung einer der Sensitivitätsflächen 5 und einer der Codeflächen 2 jeweils in einem Winkelabstand von 360 Grad / (N*(N/2-1)).

Anders ausgedrückt ist in der gezeigten Anordnung der Drehwinkelabstand um die Drehachse zwischen den Maxima der Kapazität an einer der Sensitivitätsflächen 5 entsprechend dieser Formel zu bestimmen - also bei N=12 zu 6 Grad - wie dies in der Figur gezeigt ist. Die Auseinanderfolge der maximalen Überlappungen ist jedoch nicht zwingend bei einer Umdrehung in ihrer Abfolge umlaufend, wie dies im gezeigten Beispiel ersichtlich ist.

Jeweils gegenüberliegend zu der dunkel dargestellten Sensitivitätsfläche 5 mit der maximalen Überlappung, liegt eine Sensitivitätsfläche 5, welche nicht von einer Codefläche 2 überlappt ist, und somit ein Minimum des Kapazitätswerts aufweist. Dies ermöglicht als einfaches Beispiel eine differenzielle Auswertung von Minima und Maxima, wodurch ein allfälliger gemeinsamer Offset bestimmt und/oder kompensiert werden kann. Bei Betrachtung der Figur sind noch weitere differenzielle oder symmetrische Eigenschaften dieser Ausführungsform der erfindungsgemässen Code- und Sensitivitätsflächenanordnung offensichtlich, welche zu einer weiteren Lagenmesswertverbesserung durch Mittelungen, Maximum-Likelyhood oder statistischen Methoden herangezogen werden können. Deren generische, mathematische Beschreibung würde sich jedoch Formal als zu komplex erweisen um diese hier im Detail darlegen zu können.

Entsprechend der zuvor beschriebenen Kapazitätsverhältnisse, kann die Auflösung der Kapazitätsmessung verbessert werden und anhand einer Bewertung von mehreren Sensitivitätsflächen 5 die kann die Drehlage absolut und mit hoher Lagenpräzision und Wiederholbarkeit bestimmt werden.

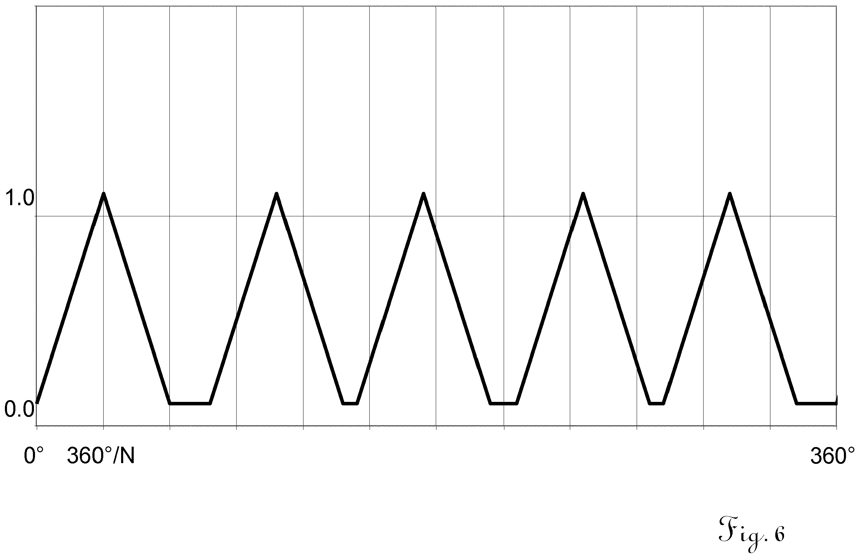

In **Fig. 6** ist ein Diagramm des mittels einer der Sensitivitätsflächen 5 bestimmten Kapazitätswertes (bzw. die hierzu proportionale Flächenüberlappung der Sensitivitätsfläche mit einer der Codeflächen) über eine ganze Umdrehung von 360° dargestellt. Darin sind die unterschiedlichen Beabstandungen der X (im Bsp. X = 5) Codeflächen 2, welche diese eine Sensitivitätsfläche 5 während der vollen Umdrehung überstreichen, anhand des Winkelbereichs, bei welchem der Wert auf Null ist bzw. bei welchem Winkel der Wert auf Eins ist, ersichtlich. Die gleiche Form der gezeigten Signalspitzen resultiert aus gleichen Segmentbreiten aller X Codeflächen 5.

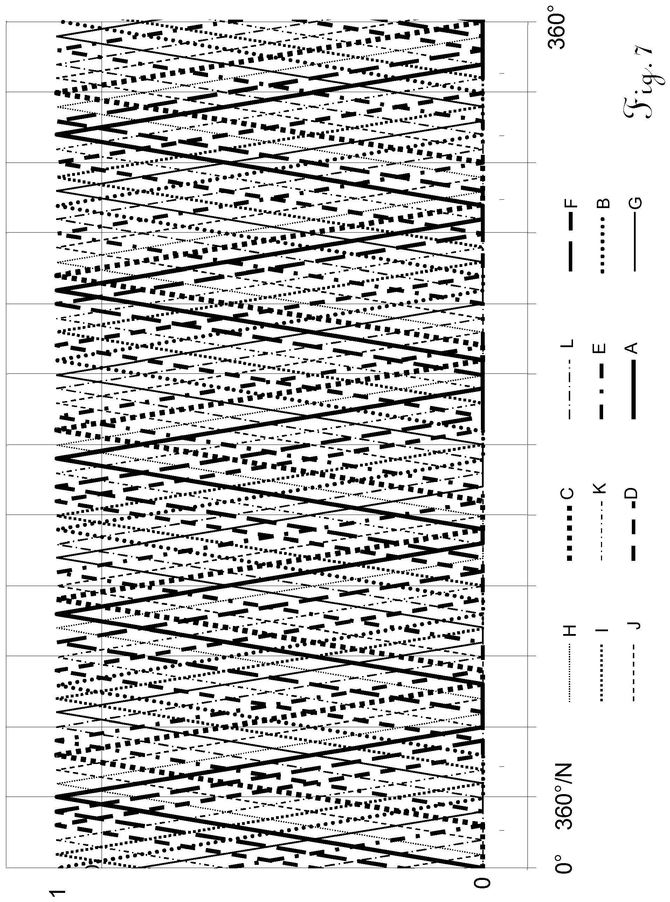

In **Fig. 7** ist ein Diagramm mit den Signalen von allen zwölf Sensitivitätsflächen 5 aus dem Beispiel - Nummeriert nach dem Schema aus Fig. 4 - darstellt. Darin sind die erfindungsgemässen Symmetrieverhältnisse bei jedem Drehwinkel ersichtlich, mithilfe welcher erfindungsgemäss eine Verbesserung des Winkelmesswerts erzielt werden kann. Auch ist hieraus ersichtlich, dass anhand dieser Signale jede Winkellage eindeutig bestimmt werden kann, was eine absolute Codierung des Drehwinkels des Pendants 10 gegenüber der Transceiver-Einheit 9 bedeutet.

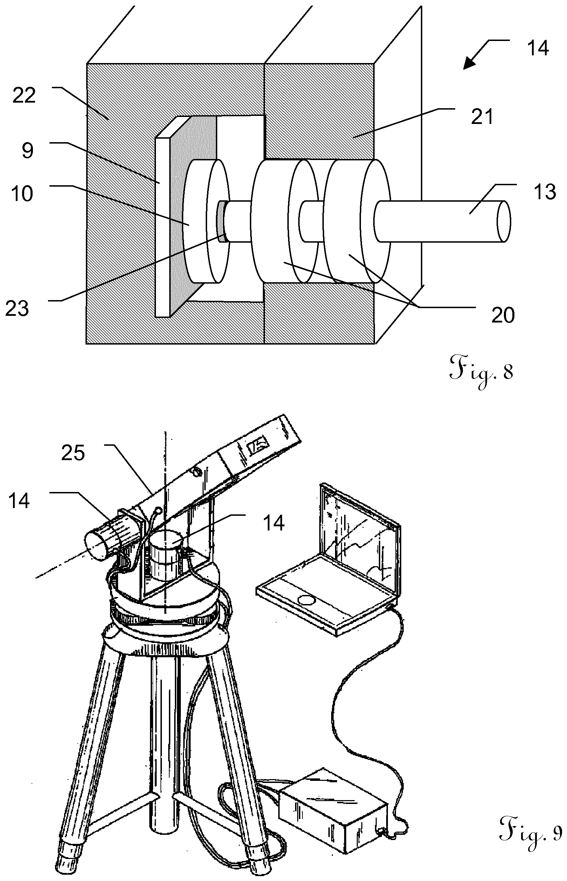

**Fig. 8** zeigt ein Beispiel einer erfindungsgemässen Ausführungsform, bei welcher das Pendant 10 auf einer Drehachse 13 angebracht ist. Das Anbringen des Pendants 10 an der Drehachse 13 kann beispielsweise durch einen Flansch 23 geschehen, gegebenenfalls mit einer Zentrierung durch eine Bohrung in der Mitte des Pendants 10. Auch kann die Drehachse 13 durch eine zentrische Bohrung des Pendants 10 gesteckt und dort verklebt oder verlötet werden Die Drehachse 13 ist durch zwei Lager 20 drehbar gelagert, wobei diese Lagerung in einem vorderen Teil 21 des Drehgebers ausgeführt ist, welcher auch als eine externe Komponente mit der Drehachse 13, an welcher der Drehgeber zur Bestimmung der Drehlage angebracht wird, ausgebildet sein kann. Die Transceiver-Einheit 9 ist mit einem Abstand zum Pendant 10 in einem hinteren Teil des Gehäuses 22 angebracht. Da erfindungsgemäss geometrische Fehlstellungen von Transceiver-Einheit 9 zu Pendant 10 bestimm- und kompensierbar sind, kann die Montage dieser beiden mit vergleichsweise hohen Masstoleranzen ausgeführt werden, ohne dabei massgebliche Einbussen in der Drehlagenmessgenauigkeit zu erhalten.

**Fig. 9** zeigt ein Anwendungsbeispiel, bei welchem ein handhaltbarer, opto-elektronischer Entfernungsmesser 25 mittels zwei erfindungsgemässen Drehgebern 14 zu einem 3D Koordinatenmessgerät erweitert wird, um Räumliche Vermessungen in Polarkoordinaten durchzuführen. In einem anderen Anwendungsbeispiel kann auch nur ein einziger Drehgeber 14 für nur eine Richtung eingesetzt werden.

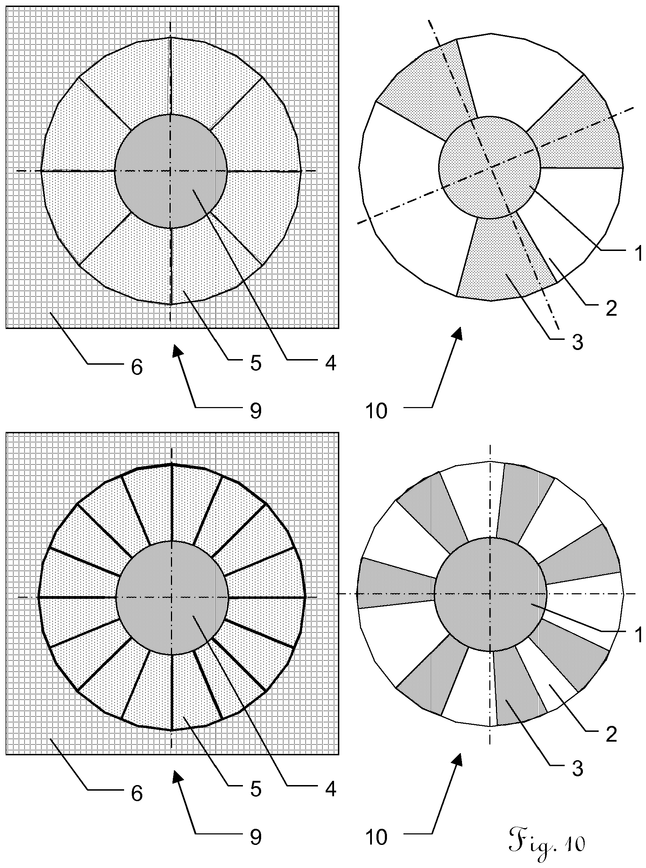

In den in **Fig. 10** gezeigten Ausführungsformen erfindungsgemäßer Drehgeber 14 ist die Anzahl N der Sensitivitätsflächen 5 nicht 12, sondern 8 bzw. 16, und die Anzahl der Codeflächen 2 entsprechend nicht 5, sondern 3 bzw. 7. Die weiteren Aspekte sind wie zuvor erläutert erfindungsgemäß ausgeführt.

Die Winkelpositionen der Codeflächen 2 ergeben sich - entsprechend obiger Erläuterungen - in der oben dargestellten beispielhaften Ausführungsform mit N = 8 zu:

| Fläche: | Winkel: |
|---|---|
| I | 0° |
| II | 105° |
| III | 255° |

Die Winkelpositionen der Codeflächen 2 ergeben sich - entsprechend obiger Erläuterungen - in der unten dargestellten beispielhaften Ausführungsform mit N = 16 zu:

| Fläche: | Winkel: |
|---|---|
| I | 0° |
| II | 51.4° |
| III | 112.9° |
| IV | 160.7° |
| V | 199.3° |
| VI | 257.1° |
| VII | 308.6° |

Der erfindungsgemäße Drehgeber bzw. das dabei verwendete Verfahren kann auch in weiteren Anwendungsgebieten zum Einsatz gebracht werden, insbesondere in Anwendungsgebieten welche eine entsprechend hohe und genaue Drehlagenauflösung sowie hohe Stückzahlen geringe Stückkosten erfordern, beispielsweise als Drehgeber für Elektromotoren, oder ähnlichem. Neben Drehgebern ließen sich in analoger Weise auch Lineargeber nach dem erfindungsgemäßen Konzept ausbilden, insbesondere bei einem eingeschränkten Messbereich oder bei einer sich periodisch wiederholenden Absolutcodierung.

Das hier dargelegte Symmetrie-Prinzip des Drehlagengebers, welcher hier als kapazitiv beschrieben ist, lässt sich auch auf andere Sensorprinzipien, z.B. magnetische oder optische Erfassungsprinzipien anwenden.

## Patentansprüche

1. Kapazitiver Drehlagengeber (14) zur absoluten Bestimmung einer Drehlage um eine Drehachse (13), mit
▪ einer Transceiver-Einheit (9), mit
∘ einer ersten Anordnung von N elektrisch leitfähigen, kapazitiven Sensitivitätsflächen (5), welche als Winkelsegmente über einen definierten Winkelbereich, insbesondere von annähernd 360°/N, ausgebildet sind, welche über den Umfang gleichförmig verteilt sind,
∘ einer elektrisch leitfähigen Referenzfläche (4) und
∘ einer Auswerteschaltung mittels welcher ein elektrischer Kapazitätswert zwischen der Referenzfläche (4) und einer der Sensitivitätsflächen (5) bestimmbar ist,
wobei die Sensitivitätsflächen (5) und die Referenzfläche (4) als Leiterbahnstrukturen auf einer ersten Elektronik-Leiterplatte (6) ausgebildet sind, und
▪ einem der Transceiver-Einheit (9) gegenüberliegenden und relativ zu dieser um die Drehachse (13) drehbaren Pendant (10) mit
∘ einer, der Referenzfläche (4) gegenüberliegend angeordneten, Referenz-Koppelfläche (1) und
∘ einer damit elektrisch verbundenen Anordnung von X ≥ 3 elektrisch leitfähigen Codefläche (2),
**dadurch gekennzeichnet, dass**
die Codeflächen (2)
• als Winkelsegmente mit zumindest annähernd demselben definierten Winkelbereich wie die Sensitivitätsflächen (5) ausgebildet sind und
• in einer rotationsasymmetrischen Winkelverteilung um die Drehachse (13) angeordnet sind.

2. Drehlagengeber (14) nach Anspruch 1, **dadurch gekenntzeichnet, dass**
die Codeflächen (2) derart angeordnet sind, dass in jeder beliebigen Drehlage maximal eine einzige der Codeflächen (2) mit einer der Sensitivitätsflächen (5) zu deren maximaler Überlappung gelangt.

3. Drehlagengeber (14) nach Anspruch 2, **dadurch gekenntzeichnet, dass**
die Codeflächen (2) derart angeordnet sind, dass bei einer unidirektionalen Änderung der Drehlagen eine Abfolge der maximalen Überlappungen entsteht, bei welcher die maximalen Überlappungen in einem diagonal gegenüberliegend Bereich 50 zur jeweils vorherigen maximalen Überlappung auftreten,
insbesondere also bei unidirektionaler Drehung die maximalen Überlappungen mit einem Winkelabstand von mehr als 45° oder 90° zueinander erfolgen.

4. Drehlagengeber (14) nach einem der Ansprüche 1 bis 3, **dadurch gekennzeichnet, dass**
das Pendant (10) als zweite Elektronik-Leiterplatte (3) und die Referenz-Koppelfläche (1) und die Codeflächen (2) als insbesondere einstückige Leiterbahnstruktur auf dieser ausgebildet sind.

5. Drehlagengeber (14) nach Anspruch 4, **dadurch gekennzeschnet, dass**
das Pendant (10) auf seiner der Tranceiver-Einheit (9) zugewandten und abgewandten Seite mit zumindest annähernd denselben Leiterbahnstruktur versehen ist.

6. Drehlagengeber (14) nach einem der Ansprüche 1 bis 5, **dadurch gekennzeichnet, dass**
die Referenzfläche (4) als eine einzige Referenzfläche (4) ausgebildet ist, welche von der Auswerteschaltung mit einem RF-Signal beaufschlagt wird, welches kapazitiv zum Pendant (10) und von diesem über dessen Codeflächen (2) auf die Sensitivitätsflächen (5) gekoppelt wird, sodass N drehwinkelabhängigen Kapazitätswerte zwischen der Referenzfläche (4) und jeweils einer der N Sensitivitätsflächen (5) bestimmbar sind.

7. Drehlagengeber (14) nach einem der Ansprüche 1 bis 6, **dadurch gekennzeichnet, dass**
die Anzahl der Codeflächen (2) X = N/2 - 1 beträgt.

8. Drehlagengeber (14) nach einem der Ansprüche 1 bis 7, **dadurch gekennzeichnet, dass**
die Codeflächen (2) und die Sensitivitätsflächen (5) zumindest annähernd dieselbe Geometrie aufweisen.

9. Drehlagengeber (14) nach einem der Ansprüche 2 bis 8, **dadurch gekennzeichnet, dass**
bei jeder der maximalen Überlappungen eine der Sensitivitätsflächen (5), welche dieser maximalen Überlappung diagonal gegenüberliegt, von keiner Codefläche (2) überlappt wird und/oder die Codeflächen-Anordnung bezüglich zumindest einer Durchmesserachse (15) spiegelsymmetrisch ist.

10. Drehlagengeber (14) nach einem der Ansprüche 1 bis 9, **dadurch gekennzeichnet, dass**
die Winkelverteilung der Codefläche (2) derart gestaltet ist, dass in einem Drehwinkelabstand von 360°/(N*X) jeweils eine maximale Überlappung einer der Codeflächen (2) mit einer der Sensitivitätsflächen (5) auftritt.

11. Drehlagengeber (14) nach einem der Ansprüche 1 bis 10, **dadurch gekennzeichnet, dass**
die Winkelverteilung der Codeflächen (2) derart gestaltet ist, dass die Winkelabstände zwischen benachbarten Codeflächen (2) jeweils um 360°/N, oder 0 plus einem Vielfachen von 360°/(N*X) variert sind, insbesondere wobei eine Anzahl von (N*X) von maximalen Kopplungen von einer der Codeflächen (2) mit einer der Senzitivitätsflächen (5) pro Umdrehung auftritt.

12. Drehlagengeber (14) nach einem der Ansprüche 1 bis 11, **dadurch gekennzeichnet, dass**
auf der Tansceiver-Einheit (9) N = 12 Sensitivitätsflächen (5) als Kreisringsegmente mit dem Winkelbereich von 360°/N um die kreisförmig ausgebildete Referenzelektrode angeordnet sind und auf dem Pendant X = 5 Codeflächen (2) mit dem Winkelbereich von 36D°/N angeordnet sind, welche einstückig mit einer mittigen, kreisförmig ausgebildeten Referenzfläche-Koppelfläche verbunden sind,
insbesondere wobei die Winkelbeabstandungen der Codefläche (2) zueinander 360°/N + m*360°/(N*X), mit m=1..3 betragen.

13. Verfahren zur kapazitiven Drehlagenerfassung mit einem kapazitive Koppeln von
▪ einer Referenzfläche (4) zu
▪ einer Referenz-Koppelfläche (1) und über X ≥ 3 mit dieser leitfähig verbundenen Codeflächen (2) zu
▪ einer Teilmenge von N Sensitivitätsflächen (5), wobei durch eine Auswerteschaltung mittels eines Anlegens eines RF-Signals an die Referenzfläche (4) ein Bestimmen von N Kapazitätswerten zwischen der Referenzfläche (4) und den Sensitivitätsflächen (5) erfolgt, und wobei
▪ die Referenzfläche (4) mit den Sensitivitätsflächen (5) und mit der Auswerteschaltung auf einer als Elektronik-Leiterplatte (6) ausgebildeten Transceiver Einheit (9) und
▪ die Referenz-Koppelfläche (1) mit den Codeflächen (2) auf einem gegenüber der Transceiver Einheit (9) um eine Drehachse (13) drehbaren Pendant (10) angeordnet sind,
**dadurch gekenntzeichnet, dass**
mit einer nichtrotationssymetrische Winkelverteilung der Codeflächen (2) die Drehlagenerfassung absolut erfolgt, insbesondere wobei bei der Drehlagenerfassung auf Basis von Symmetrieeigenschaften eine Bestimmung und Kompensation von geometrischen Fehlstellungen der Codeflächen (2) zu den Sensitivitätsflächen (5) erfolgt.

14. Verfahren nach Anspruch 13, **dadurch gekenntzeichnet, dass**
die Bestimmung und Kompensation von geometrischen Fehlstellungen der Codeflächen (2) zu den Sensitivitätsflächen (5) unter einer differenziellen Auswertung der durch deren Anordnung resultierenden Kapazitätsverteilung erfolgt, bei welcher Anordnung in jeder beliebigen Drehlage maximal eine der Codeflächen (2) maximal mit einer der Sensitivitätsflächen (5) überlappt, insbesondere wobei dabei eine, der vollständigen Überlappung gegenüberliegende, Sensitivitätsfläche (5) keine Überlappung aufweist.

## Claims

1. Capacitive rotary position encoder (14) for the absolute determination of a rotary position about a rotary axis (13), comprising
▪ a transceiver unit (9), comprising
∘ a first arrangement of N electrically conductive, capacitive sensitivity areas (5) which are embodied as angle segments over a defined angle range, in particular of approximately 360°/N, which are distributed uniformly over the circumference,
∘ an electrically conductive reference area (4) and
∘ an evaluation circuit, by means of which an electrical capacitance value between the reference area (4) and one of the sensitivity areas (5) is determinable,
wherein the sensitivity areas (5) and the reference area (4) are embodied as conductor track structures on a first electronics printed circuit board (6), and
▪ a counterpart (10) situated opposite the transceiver unit (9) and rotatable relative thereto about the rotary axis (13) and comprising
∘ a reference coupling area (1) arranged opposite the reference area (4), and
∘ an arrangement of X ≥ 3 electrically conductive code areas (2) electrically connected thereto,
**characterized in that**
the code areas (2)
• are embodied as angle segments having at least approximately the same defined angle range as the sensitivity areas (5) and
• are arranged in a rotationally asymmetrical angular distribution about the rotary axis (13).

2. Rotary position encoder (14) according to Claim 1, **characterized in that**
the code areas (2) are arranged in such a way that in any arbitrary rotary position maximally a single one of the code areas (2) with one of the sensitivity areas (5) attains the maximum overlap thereof.

3. Rotary position encoder (14) according to Claim 2, **characterized in that**
the code areas (2) are arranged in such a way that upon a unidirectional change in the rotary positions a sequence of the maximum overlaps arises in which the maximum overlaps occur in a diagonally opposite region (50) relative to the respectively previous maximum overlap,
that is to say in particular upon unidirectional rotation the maximum overlaps are effected with an angular separation of more than 45° or 90° with respect to one another.

4. Rotary position encoder (14) according to any one of Claims 1 to 3, **characterized in that**
the counterpart (10) is embodied as a second electronics printed circuit board (3) and the reference coupling area (1) and the code areas (2) are embodied as an in particular integral conductor track structure thereon.

5. Rotary position encoder (14) according to Claim 4, **characterized in that**
the counterpart (10) is provided with at least approximately the same conductor track structure on its side facing and facing away from the transceiver unit (9).

6. Rotary position encoder (14) according to any one of Claims 1 to 5, **characterized in that**
the reference area (4) is embodied as a single reference area (4), to which the evaluation circuit applies an RF signal which is capacitively coupled to the counterpart (10) and from the latter via the code areas (2) thereof to the sensitivity areas (5), such that N rotation-angle-dependent capacitance values between the reference area (4) and in each case one of the N sensitivity areas (5) are determinable.

7. Rotary position encoder (14) according to any one of Claims 1 to 6, **characterized in that**
the number of code areas (2) is X = N/2 - 1.

8. Rotary position encoder (14) according to any one of Claims 1 to 7, **characterized in that**
the code areas (2) and the sensitivity areas (5) have at least approximately the same geometry.

9. Rotary position encoder (14) according to any one of Claims 2 to 8, **characterized in that**
upon each of the maximum overlaps one of the sensitivity areas (5), which is diagonally opposite said maximum overlap, is overlapped by no code area (2), and/or
the code area arrangement is mirror-symmetrical with respect to at least one diameter axis (15).

10. Rotary position encoder (14) according to any one of Claims 1 to 9, **characterized in that**
the angular distribution of the code areas (2) is configured in such a way that in each case a maximum overlap of one of the code areas (2) with one of the sensitivity areas (5) occurs at a rotation angle separation of 360°/(N*X).

11. Rotary position encoder (14) according to any one of Claims 1 to 10, **characterized in that**
the angular distribution of the code areas (2) is configured in such a way that the angle separations between adjacent code areas (2) are varied in each case by 360°/N, or 0 plus a multiple of 360°/(N*X), in particular wherein a number of (N*X) of maximum couplings of one of the code areas (2) with one of the sensitivity areas (5) occurs per revolution.

12. Rotary position encoder (14) according to any one of Claims 1 to 11, **characterized in that**
on the transceiver unit (9) N = 12 sensitivity areas (5) are arranged as annulus segments with the angle range of 360°/N around the reference electrode embodied in a circular fashion, and
X = 5 code areas (2) with the angle range of 360°/N are arranged on the counterpart, said code areas being integrally connected to a central reference area coupling area embodied in a circular fashion, in particular wherein the angle separations of the code areas (2) with respect to one another are 360°/N + m*360°/(N*X), where m = 1..3.

13. Method for capacitive rotary position detection comprising capacitive coupling of
▪ a reference area (4) to
▪ a reference coupling area (1) and via X ≥ 3 code areas (2) conductively coupled thereto to
▪ a subset of N sensitivity areas (5),
wherein N capacitance values between the reference area (4) and the sensitivity areas (5) are determined by an evaluation circuit by means of application of an RF signal to the reference area (4), and wherein
▪ the reference area (4) with the sensitivity areas (5) and with the evaluation circuit are arranged on a transceiver unit (9) embodied as an electronics printed circuit board (6), and
▪ the reference coupling area (1) with the code areas (2) are arranged on a counterpart (10) rotatable relative to the transceiver unit (9) about a rotary axis (13),
**characterized in that**
the rotary position detection is effected in an absolute fashion with a non-rotationally symmetrical angular distribution of the code areas (2), in particular wherein a determination and compensation of geometrical incorrect positions of the code areas (2) with respect to the sensitivity areas (5) are effected during the rotary position detection on the basis of symmetry properties.

14. Method according to Claim 13, **characterized in that** the determination and compensation of geometrical incorrect positions of the code areas (2) with respect to the sensitivity areas (5) are effected with a differential evaluation of the capacitance distribution resulting from the arrangement thereof, in which arrangement in any arbitrary rotary position maximally one of the code areas (2) maximally overlaps one of the sensitivity areas (5), in particular wherein in this case a sensitivity area (5) situated opposite the complete overlap has no overlap.

## Revendications

1. Capteur de rotation capacitif (14) destiné à déterminer une position absolue de rotation sur un axe de rotation (13), comportant
• un émetteur-récepteur (9), comportant
∘ un premier agencement de N surfaces sensibles (5) capacitives et conductrices de l'électricité, formées en des secteurs angulaires sur une plage angulaire définie, notamment d'environ 360°/N, qui sont uniformément répartis sur la circonférence,
∘ une surface de référence (4) conductrice de l'électricité, et
∘ un circuit d'évaluation permettant de déterminer une valeur de capacité électrique entre la surface de référence (4) et une des surfaces sensibles (5),
les surfaces sensibles (5) et la surface de référence (4) étant conçues sous la forme de structures de pistes conductrices sur une première plaquette de circuit imprimé électronique (6), et
• un pendant (10) faisant face à l'émetteur-récepteur (9) et pouvant tourner par rapport à lui sur l'axe de rotation (13), comportant
∘ une surface de couplage de référence (1) disposée face à la surface de référence (4), et
∘ raccordé électriquement à celle-ci, un agencement de X ≥ 3 surfaces de code (2) conductrices de l'électricité,
**caractérisé en ce que**
les surfaces de code (2)
• sont formées en des secteurs angulaires dont la plage angulaire définie est au moins approximativement égale à celle des surfaces sensibles (5), et
• sont disposées autour de l'axe de rotation (13) selon une répartition angulaire asymétrique en rotation.

2. Capteur de rotation capacitif (14) selon la revendication 1, **caractérisé en ce que**
les surfaces de code (2) sont disposées de manière que, dans une quelconque position de rotation, au plus une seule des surfaces de code (2) est en recouvrement maximal d'une des surfaces sensibles (5).

3. Capteur de rotation capacitif (14) selon la revendication 2, **caractérisé en ce que**
les surfaces de code (2) sont disposées de manière que, lors d'une modification unidirectionnelle de la position de rotation, il se produit une succession de recouvrements maximaux dans laquelle chaque recouvrement maximal se situe dans une zone (50) diamétralement opposée au recouvrement maximal précédent,
notamment donc, lors d'une rotation unidirectionnelle, il se produit des recouvrements maximaux distants les uns des autres de plus de 45° ou 90°.

4. Capteur de rotation capacitif (14) selon l'une des revendications 1 à 3, **caractérisé en ce que**
le pendant (10) est conçu sous la forme d'une deuxième plaquette de circuit imprimé électronique (3), et sur celle-ci, la surface de couplage de référence (1) et les surfaces de code (2) sont notamment conçues sous la forme d'une structure unitaire de pistes conductrices.

5. Capteur de rotation capacitif (14) selon la revendication 4, **caractérisé en ce que**
le pendant (10) est doté, sur sa face tournée vers l'émetteur-récepteur (9) et sur sa face détournée de celui-ci, d'une structure de pistes conductrices au moins similaire.

6. Capteur de rotation capacitif (14) selon l'une des revendications 1 à 5, **caractérisé en ce que**
la surface de référence (4) est conçue sous la forme d'une seule surface de référence (4) qui est soumise, par le circuit d'évaluation, à un signal RF qui est couplé de manière capacitive au pendant (10) et, à partir de celui-ci, par ses surfaces de code (2) jusqu'aux surfaces sensibles (5), de manière que N valeurs capacitives dépendant de l'angle de rotation peuvent être déterminées, chacune entre la surface de référence (4) et l'une des N surfaces sensibles (5).

7. Capteur de rotation capacitif (14) selon l'une des revendications 1 à 6, **caractérisé en ce que**
le nombre de surfaces de code (2) est X = N/2 - 1.

8. Capteur de rotation capacitif (14) selon l'une des revendications 1 à 7, **caractérisé en ce que**
les surfaces de code (2) et les surfaces sensibles (5) présentent des géométries au moins similaires.

9. Capteur de rotation capacitif (14) selon l'une des revendications 2 à 8, **caractérisé en ce que**
pour chacun des recouvrements maximaux, une des surfaces sensibles (5) diamétralement opposée à ce recouvrement maximal n'est recouverte par aucune surface de code (2) et/ou l'agencement des surfaces de code (2) est symétrique par rapport à au moins un axe diamétral (15).

10. Capteur de rotation capacitif (14) selon l'une des revendications 1 à 9, **caractérisé en ce que**
la répartition angulaire des surfaces de code (2) est telle que pour chaque rotation angulaire de 360°/(N*X), il se produit un recouvrement maximal de l'une des surfaces de code (2) par l'une des surfaces sensibles (5).

11. Capteur de rotation capacitif (14) selon l'une des revendications 1 à 10, **caractérisé en ce que**
la répartition angulaire des surfaces de code (2) est telle que les écarts angulaires entre surfaces de code (2) voisines varient chacun de 360°/N, ou de 0 plus un multiple de 360°/(N*X), en sachant notamment qu'il se produit, par tour, un nombre (N*X) de couplages maximaux de l'une des surfaces de code (2) avec une des surfaces sensibles (5).

12. Capteur de rotation capacitif (14) selon l'une des revendications 1 à 11, **caractérisé en ce que**
sur l'émetteur-récepteur (9) sont disposées N = 12 surfaces sensibles (5) en segments de couronne, avec une plage angulaire de 360°/N, autour de l'électrode de référence de forme circulaire, et
sur le pendant sont disposées X = 5 surfaces de code (2) avec une plage angulaire de 360°/N, lesquelles sont raccordées d'un seul tenant avec une surface de couplage de référence centrale circulaire,
les écarts angulaires entre surfaces de code (2) étant notamment égaux à 360°/N + m*360°/(N*X), où m = 1 à 3.

13. Procédé de détection capacitive d'une position de rotation par couplage capacitif de
• une surface de référence (4) à
• une surface de couplage de référence (1), elle-même couplée, par X ≥ 3 surfaces de code (2) qui lui sont raccordées électriquement, à
• un sous-ensemble de N surfaces sensibles (5),
dans lequel un circuit d'évaluation détermine N valeurs capacitives entre la surface de référence (4) et les surfaces sensibles (5), au moyen d'un signal RF appliqué à la surface de référence (4), et dans lequel
• la surface de référence (4), les surfaces sensibles (5) et le circuit d'évaluation sont disposés sur un émetteur-récepteur (9) conçu sous la forme d'une plaquette de circuit imprimé électronique (6), et
• la surface de couplage de référence (1) et les surfaces de code (2) sont disposées sur un pendant (10) faisant face à l'émetteur-récepteur (9) et pouvant tourner sur un axe de rotation (13),
**caractérisé en ce que**
il est détecté une position absolue de rotation au moyen d'une répartition angulaire asymétrique en rotation des surfaces de code (2), des anomalies géométriques de position des surfaces de code (2) vis-à-vis des surfaces sensibles (5) étant notamment déterminées et compensées à partir des propriétés de symétrie lors de la détection de la position de rotation.

14. Procédé selon la revendication 13, **caractérisé en ce que** les anomalies géométriques de position des surfaces de code (2) vis-à-vis des surfaces sensibles (5) sont déterminées et compensées par une évaluation différentielle de la répartition des capacités résultant de leur agencement, lequel agencement est tel que, dans une quelconque position de rotation, au plus une des surfaces de code (2) est en recouvrement maximal d'une des surfaces sensibles (5), en sachant notamment qu'une surface sensible (5) située à l'opposé du recouvrement complet ne présente aucun recouvrement.
